Europäisches Patentamt

European Patent Office

Office européen des brevets

(11) Numéro de publication: **0 017 571**
**B1**

## (12) FASCICULE DE BREVET EUROPEEN

(45) Date de publication du fascicule du brevet: **10.10.84**

(21) Numéro de dépôt: **80400419.0**

(22) Date de dépôt: **28.03.80**

(51) Int. Cl.³: **G 02 F 1/21,** G 02 F 1/03

(54) **Modulateur d'intensité lumineuse en optique intégrée et circuit optique intégré comportant un tel modulateur.**

(30) Priorité: **03.04.79 FR 7908372**

(43) Date de publication de la demande:
**15.10.80 Bulletin 80/21**

(45) Mention de la délivrance du brevet:
**10.10.84 Bulletin 84/41**

(84) Etats contractants désignés:
**DE GB IT NL SE**

(56) Documents cités:
**FR-A-2 218 612**

**APPLIED PHYSICS LETTERS, vol. 32, no. 10, 15 mai 1978 New York US V. RAMASWAMY et al.: "Balanced bridge modulator switch using Tidiffused LiNBO3 striop waveguides" pages 644-646**
**APPLIED PHYSICS LETTERS, vol. 31, no. 12, 15 décembre 1977 New York US T.R. RANGANATH et al.: "Light detection in dielectric waveguides by a photodiode through direct evanscent field coupling", pages 803-806**

(73) Titulaire: **THOMSON-CSF**
**173, Boulevard Haussmann**
**F-75379 Paris Cedex 08 (FR)**

(72) Inventeur: **Papuchon, Michel**
**"THOMSON-CSF", SCPI 173, Bld Haussmann**
**F-75360 Paris Cedex 08 (FR)**
Inventeur: **Puech, Claude**
**"THOMSON-CSF", SCPI 173, Bld Haussmann**
**F-75360 Paris Cedex 08 (FR)**

(74) Mandataire: **Wang, Pierre et al**
**THOMSON-CSF SCPI 173, Bld Haussmann**
**F-75379 Paris Cedex 08 (FR)**

(56) Documents cités:
**IEEE JOURNAL OF QUANTUM ELECTRONICS vol. QE-14, no. 8, aoÛt 1978 New York US P.S. CROSS et al.: "Optically controlled two channel integrated-optical switch", pages 577-580**

Courier Press, Leamington Spa, England.

# Description

La présente invention concerne un modulateur d'intensité lumineuse en optique intégrée.

L'utilisation de l'effet électrooptique mis en évidence notamment dans les matériaux ferroélectriques a permis de réaliser des modulateurs de lumière, selon des formes de réalisation diverses compatibles avec les techniques d'intégration selon lesquelles des guides d'onde optique sont obtenus dans un substrat d'indice $n_0$ en y créant des zones où l'indice de réfraction est supérieur à $n_0$. L'un de ces modes de réalisation consiste en un interféromètre à deux bras dans lequel on crée, par effet électrooptique, une différence de vitesse de propagation dans les deux bras, produisant un déphasage commandé électriquement entre les ondes issues des deux bras. L'intensité lumineuse émergente est variable avec le déphasage et peut donc être modulée par une tension électrique induisant l'effet électrooptique. On montre facilement et on peut constater expérimentalement que la variation de l'intensité lumineuse résultante en fonction du déphasage différentiel entre les deux bras est sinusoidale. Un tel modulateur a été décrit dans la revue Applied Physics Letters, vol 27, n° 10, nov. 1975, p 544—546. Par ailleurs, il est connu du document FR—A—2 218 612 un appareil de réalisation de disques vidéo dans lequel l'intensité moyenne d'un faisceau inscripteur est stabilisée par une boucle réagissant sur une cellule de modulation à effet Pockels grâce à un prélèvement de lumière effectué sur la partie du faisceau inscripteur qui émerge de cette cellule. Cette disposition vise à fixer le point de fonctionnement de la cellule modulatrice de manière que celle-ci ait une plage utile et raisonnablement linéaire de fonctionnement, mais il n'en résulte pas de modification de la caractéristique entrée-sortie du modulateur optique. Or, il est nécessaire dans de nombreuses applications, concernant la transmission de signaux analogiques, de disposer dans une plage déterminée, d'une variation linéaire, ce qui n'est vérifié qu'au voisinage des points d'inflexion de la courbe de variation.

L'invention vise à augmenter l'étendue de la plage de modulation linéaire en utilisant la structure interférométrique connue et en y ajoutant une boucle de rétro-réaction optoélectronique. Elle utilise pour cela la possibilité de créer des champs électriques dans les deux bras de l'interféromètre, l'un des bras étant par exemple soumis au champ provenant de la tension de modulation, l'autre à un champ excité par la boucle de rétroréaction et proportionnel à l'intensité lumineuse de sortie. L'invention consiste donc en un modulateur d'intensité lumineuse comprenant, à la surface d'un substrat possédant des propriétés électrooptiques, un interféromètre à deux bras reliés à un guide d'entrée destiné à recevoir un rayonnement optique incident, les fractions de rayonnement propagées dans les deux bras se combinant à la sortie de l'interféromètre dans un guide de sortie, l'intensité du rayonnement émergeant étant fonction du déphasage introduit dans l'interféromètre par un champ électrique modulant entre des électrodes appliqué à au moins l'un des bras, caractérisé en ce qu'il comprend un séparateur d'énergie lumineuse interposé sur le guide de sortie, permettant d'extraire une partie de l'intensité émergente pour la coupler à un photodétecteur fournissant un champ électrique modulant de rétro-réaction entre des électrodes dans au moins l'un des bras, afin d'augmenter l'étendue de la plage de modulation linéaire.

L'invention sera mieux comprise à l'aide de la description ci'après et des figures annexées parmi lesquelles:

— la Figure 1 représente un modulateur de type connu;
— la Figure 2 est le diagramme de réponse du modulateur de la Figure 1;
— la Figure 3 est un schéma de modulateur selon l'invention;
— la Figure 4 est un diagramme de réponse du modulateur selon l'invention;
— la Figure 5 représente un mode de réalisation du modulateur selon l'invention;
— les Figures 6, 7 et 8 sont des variantes de réalisation de certaines parties du modulateur de la Figure 5.

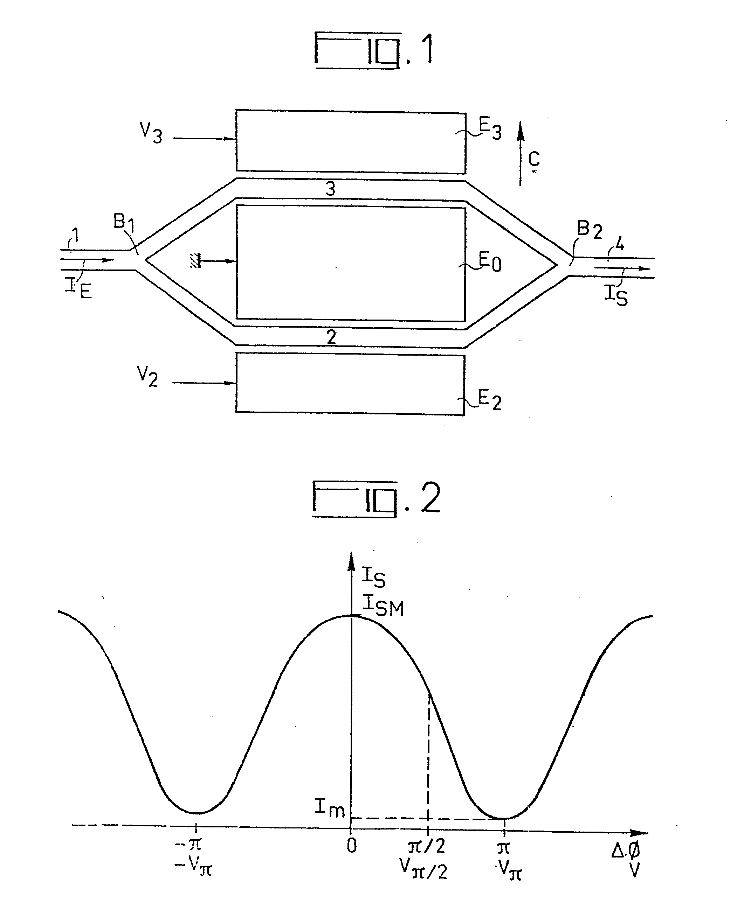

On peut voir sur la Figure 1 le schéma d'un interféromètre à deux bras pouvant servir à moduler l'intensité lumineuse selon une méthode connue. Cet interféromètre comprend une branche de guide d'onde d'entrée 1 monomode dans laquelle est couplée une onde lumineuse d'intensité $I_E$. Cette branche 1 bifurque en une bifurcation $B_1$ en deux bras parallèles 2 et 3 constituant des guides monomodes, qui se rejoignent en une bifurcation $B_2$ pour former une branche de guide d'onde de sortie monomode 4 où l'on peut récupérer une intensité $I_S$. Les directions de propagation dans les quatre guides sont les mêmes. Des électrodes sont disposées de part et d'autre de chacun des guides 2 et 3, par example une électrode contrale $E_0$, une électrode $E_2$ de l'autre côté du bras 2 et à laquelle on applique une tension $V_2$ et une électrode $E_3$ de l'autre côté du bras 3 à laquelle on applique une tension $V_3$, l'électrode $E_0$ étant reliée à la masse. La disposition des électrodes telle que représentée sur la figure, c'est-à-dire ne recouvrant pas les guides mais leur étant adjacents, provoque dans chacun des guides 2 et 3 des champs électriques perpendiculaires à la direction de propagation des ondes lumineuses et dans le plan de la figure. Dans ce cas, le mode de propagation utilisé dans les guides est un mode TE. L'ensemble du dispositif est réalisée à la surface d'un substrat possédant des propriétés électrooptiques, tel que le niobate de lithium

(LiNbO$_3$), le tantale de lithium (LiTaO$_3$), l'arséniure de gallium (GaAs) ... Dans un substrat de niobate de lithium par exemple, les guides d'onde optique sont obtenus par diffusion de titane. Cette diffusion est sélective grâce à des procédés de photolithographie classique. Dans le cas de la figure où les champs électriques appliqués aux guides sont dans le plan de la figure, il est préférable que l'axe cristallographique c du niobate de lithium soit également dans ce plan et perpendiculaire à la direction de propagation commune aux guides 1 à 4, de façon à présenter l'effet électrooptique maximal. Si les tensions V$_2$ et V$_3$ sont de même signe, les champs électriques appliqués aux bras 2 et 3 sont en sens opposé; ces champs provoquent des variations $\Delta\beta_2$, $\Delta\beta_3$ dans les facteurs de propagation des ondes lumineuses pour chacun des deux guides: la tension V$_3$ provoque une variation en sens inverse $-\Delta\beta_3$ qui lui est également proportionnelle. Ces variations de vitesse provoquent à l'emplacement de la bifurcation B$_2$ un déphasage entre les deux ondes issues des guides 2 et 3 qui se trouvaient primitivement en phase à la bifurcation B$_1$. Ce déphasage $\Delta\phi$ est égal à:

$\Delta\beta_3$ L$_3$+$\Delta\beta_2$ L$_2$ où L$_2$ et L$_3$ sont les longueurs des électrodes comprises entre les deux bifurcations B$_1$ et B$_2$. En général L$_2$=L$_3$=L, si bien que

$\Delta\phi$=($\Delta\beta_3$+$\Delta\beta_2$) L. Bien entendu, l'une des deux tensions V$_2$ ou V$_3$ peut être nulle si bien que seule la variation $\Delta\beta_3$ ou $\Delta\beta_2$ intervient. On peut mettre l'expression du déphasage $\Delta\phi$ sous la forme:

$$\frac{\pi(V_3+V_2)}{V_\pi}$$

où V$_\pi$ est la somme des tensions qui provoquent un déphasage $\Delta\phi$ égal à $\pi$. Les ondes lumineuses récupérées dans la guide 4 résultent de la combinaison des ondes issues des guides 2 et 3 arrivant dans la bifurcation B$_2$, c'est-à-dire deux ondes d'intensité

$$\alpha \frac{I_E}{2}$$

déphasées l'une par rapport à l'autre de $\Delta\phi$. On peut donc écrire l'intensité résultante I$_s$ sous la forme:

$$\alpha \frac{I_E}{2} (1+M\cos \Delta\phi)=\alpha \frac{I_E}{2} [1+M\cos \frac{\pi(V_3+V_2)}{V_\pi}]$$

où $\alpha$ et M sont des constantes qui dépendent des pertes de couplage et de la dissymétrie de l'interféromètre. On aboutit à un résultat semblable avec une seule paire d'électrodes, par exemple E$_0$ et E$_3$. Dans ce cas

$$\Delta\beta_2=0 \text{ et } I_s=\alpha \frac{I_E}{2} (1+M\cos \frac{\pi V_3}{V_\pi}).$$

La Figure 2 est la courbe représentative de l'intensité émergente I$_S$ en fonction du déphasage $\Delta\phi$ existant à l'emplacement de la bifurcation B$_2$, ou de la tension V égale à la tension (ou à la somme des tensions) appliquée à l'une au moins des électrodes E$_2$ et E$_3$, prise avec son (leur) signe par rapport à la masse. Lorsque V est nul la tension de sortie I$_S$ est maximale et vaut I$_{SM}$. Lorsque la valeur absolue de V augmente, l'intensité lumineuse I$_S$ diminue et la valeur minimale I$_m$ est obtenue pour V=V$_\pi$. Au voisinage de

$$\frac{V_\pi}{2},$$

la variation de I$_S$ peut être considérée au premier ordre comme linéaire en fonction de $\Delta\phi$ ou de V. Toutefois, le taux d'harmoniques de la variation de I$_S$ en fonction de

$$V-\frac{V_\pi}{2}$$

croît très repidement lorsqu'on s'éloigne de

$$\frac{V_\pi}{2}.$$

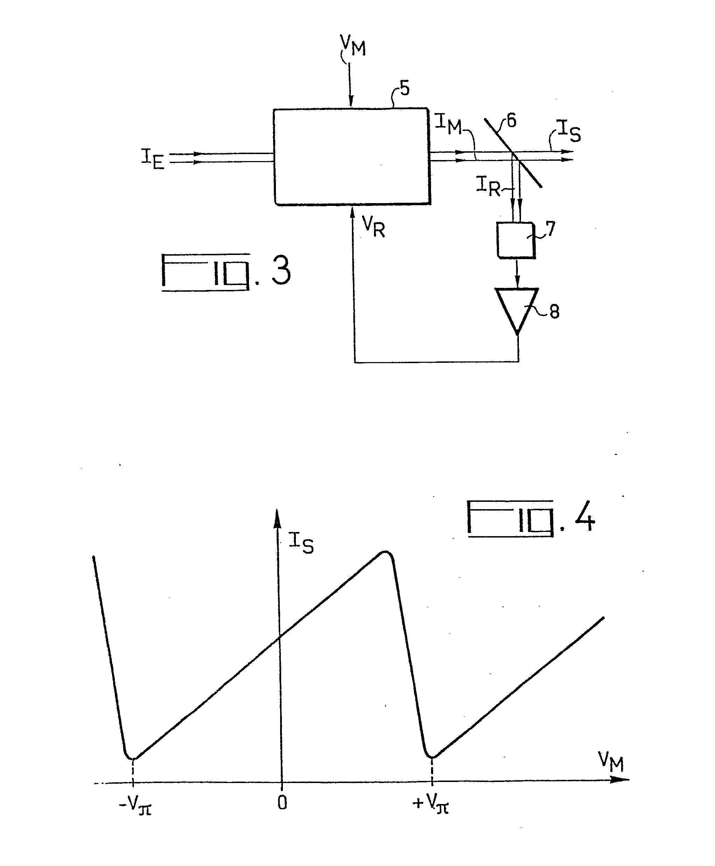

Pour améliorer la linéarité de la courbe de variation de l'intensité résultante en diminuant le taux d'harmonique 2, l'invention prévoit d'associer à l'interféromètre une boucle de rétro-réaction, comme représenté schématiquement sur la Figure 3. Sur cette Figure, le bloc 5 représente l'ensemble de l'interféromètre représenté sur la Figure 1 avec ses deux entrées de tension appelées ici V$_M$ qui est la tension modulante et V$_R$ qui est la tension de rétro-réaction dont on verra plus loin l'origine. A l'entrée de l'interféromètre 5 arrive une onde lumineuse d'intensité I$_E$, l'intensité I$_M$ récupérée à la sortie de l'interféromètre est séparée en deux par un moyen 6 de façon à obtenir une fraction constante I$_S$ qui sera l'intensité émergente et une autre fraction constante I$_R$ qui est appliquée à un photodétecteur 7 fournissant une tension électrique. Celle-ci est éventuellement amplifiée si nécessaire par un amplificateur 8 qui fournit la tension de rétro-réaction V$_R$. La tension totale V qui agit sur l'interféromètre est la somme de la tension modulante V$_M$ et de la tension de rétro-réaction V$_R$ qui est directement reliée par une relation linéaire aux intensités I$_R$ et I$_M$. C'est ainsi que l'on peut mettre l'intensité I$_M$ sous la forme:

$$\alpha . \frac{I_E}{2} [1+M\cos (\frac{\pi V_M}{V_\pi} + \frac{\pi G I_M}{V_\pi})]$$

où G est le taux de rétro-réaction lié au facteur de transmission du séparateur 6, au coefficient du photodétecteur 7 et au gain de l'amplificateur 8.

La Figure 4 montre l'allure générale de la courbe de variation de l'intensité émergente $I_S$ en fonction de la tension de modulation $V_M$. Cette courbe a une allure de dents de scie, l'intensité $I_S$ est minimale comme précédemment, lorsque $V_M$ est un multiple impair de $V_\pi$. Entre $+V_\pi$ et $-V_\pi$ par exemple on peut trouver une gamme de tensions dans laquelle la variation de l'intensité de sortie peut être considérée comme linéaire en fonction de la tension modulante. L'étendue de la zone de linéarité, comme le taux d'harmonique 2 dépendent du taux de rétro-réaction, c'est-à-dire de G et de l'intensité lumineuse d'entrée $I_E$.

Un mode de réalisation de l'invention est représenté sur la Figure 5. Le modulateur est réalisé à partir d'un substrat 11 en niobate de lithium. Les guides 1, 2, 3 et 4 sont réalisés par photolithographie et par diffusion de titane sur une certaine épaisseur sur une des faces S du substrat 11. Pour le mode de réalisation représenté, on a choisi l'orientation du niobate de lithium de façon que l'axe c soit perpendiculaire à la surface où sont déposés les guides. Ceux-ci sont disposés comme illustré sur la Figure 1. Les moyens séparateurs 6 de la Figure 3 sont réalisés par une bifurcation, le guide de sortie 4 se prolongeant en une branche 9 récupérant une fraction de l'énergie tandis que l'autre fraction se propage dans une branche 10 formant un angle de faible valeur avec les branches 4 et 9. Les branches 9 et 10 s'étendent jusqu'à une extrémité du substrat 11. De même la branche 1 s'étend jusqu'à l'autre extrémité. L'énergie lumineuse couplée à la branche 1 peut par exemple provenir d'une fibre optique 14, couplée par la tranche au substrat 11. De même l'énergie de sortie circulant dans la branche 9 peut être également récupérée par une fibre optique 12 couplée par la tranche au substrat 11. L'énergie propagée dans la branche 10 est récupérée par une photodiode 7 accolée à l'extrémité correspondante du substrat 11. En raison de l'orientation choisie pour le niobate de lithium, les électrodes $E_0$, $E_2$ et $E_3$ sont disposées de façon que les champs électriques crées dans les guides 2 et 3 soient parallèles à l'axe c, donc perpendiculaire à la surface S. Dans ce cas, le mode de propagation utilisé dans les guides est un mode TM. Pour cela, il est nécessaire qu'une électrode de chaque paire $E_0$—$E_3$ et $E_0$—$E_2$ recouvre respectivement les guides 3 et 2. On a choisi: $E_0$ recouvre le guide 3 et $E_2$ recouvre le guide 2. Ainsi, si des tensions de même polarité sont appliquées aux électrodes $E_2$ $E_3$ par rapport à l'électrode $E_0$ reliée à la masse, les champs électriques créés dans les guides 2 et 3 sont de sens opposés. Des liaisons électriques relient d'une part l'électrode $E_3$ à une source 13 procurant la tension modulante $V_M$ et d'autre part la sortie de la photodiode 7 à l'électrode $E_2$ procurant la tension de rétro-réaction $V_R$. Le choix de l'orientation de l'axe c (perpendiculaire à la surface où sont créés les guides comme sur la Figure 1) et la disposition des électrodes qui en résulte pour obtenir les effets électrooptique maximaux, sont indifférents pour le résultat quant au modulateur. Ce choix dépend éventuellement d'autres dispositifs qui pourraient être réalisés sur le même substrat 11 dans un système de transmission. En effet pour certains dispositifs le choix de l'orientation de l'axe c n'est pas indifférent. On adaptera donc le modulateur aux autres dispositifs. Le cas de la Figure 5 est celui qui se rencontre le plus fréquemment.

Le dispositif représenté a été réalisé avec des guides de largeur 2 $\mu$m et de profondeur à peu près égale, des bras 2 et 3 de longueur 5 mm, la distance entre ces bras étant égale à 60 $\mu$m et l'angle des embranchements $B_1$ et $B_2$ étant égal à 1°. On a pu obtenir un taux de modulation, c'est-à-dire un rapport

$$\frac{I_{SM}}{I_m}$$

mesuré de 0,95 et la tension caractéristique $V_\pi$ de quelques volts. La lumière couplée aux guides provient d'un laser He Ne de longueur d'onde $\lambda = 0,63$ $\mu$m et est couplée par la tranche. Le dispositif peut également être utilisé à d'autres longueurs d'onde (laser GaAs par exemple).

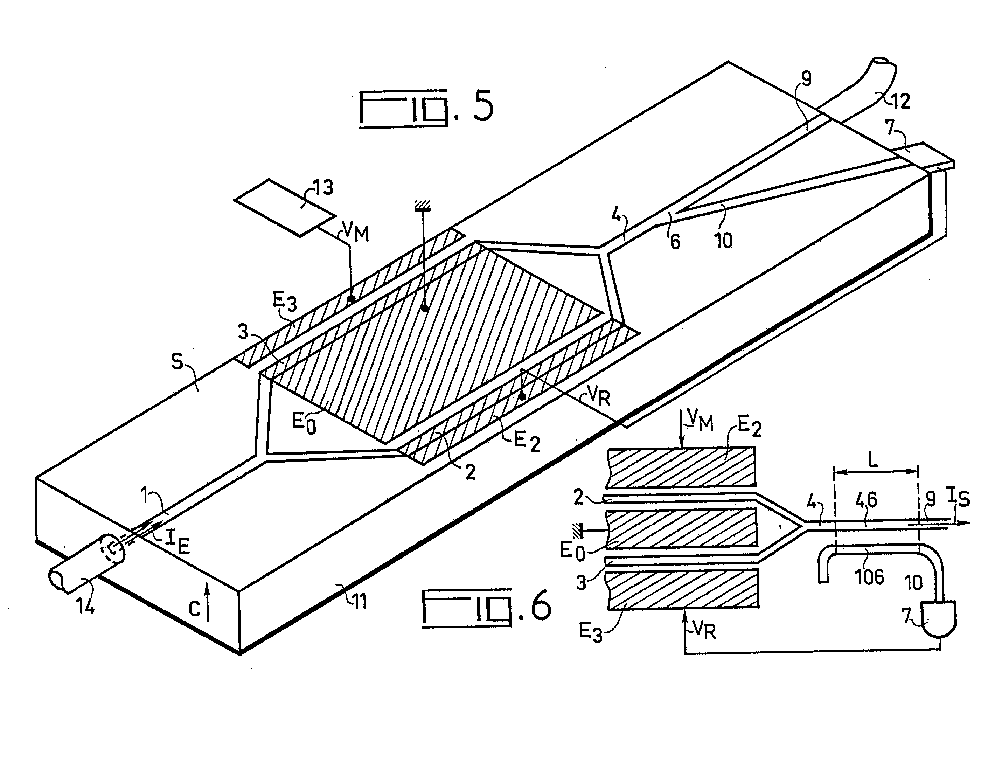

Le mode de réalisation de modulateur selon l'invention tel qu'il est représenté sur la Figure 5 admet de nombreuses variantes, notamment quant à la disposition des électrodes, à la réalisation du séparateur 6 et à l'emplacement du photodétecteur 7. La Figure 6 représente un mode de réalisation de l'invention dans lequel le séparateur 6 est constitué par un coupleur directionnel. La branche de sortie de l'interféromètre 4 se prolonge en un guide 46 parallèlement auquel est disposé, à une faible distance, un guide semblable 106. La lumière se propageant dans le guide 46 est couplée par le phénomène des ondes évanescentes dans le guide 106. En choisissant convenablement la longueur de couplage L correspondant à la longueur pour laquelle les guides 46 et 106 sont suffisamment proches l'un de l'autre pour permettre le couplage, on arrive à obtenir à la sortie du coupleur un partage de l'énergie lumineuse selon une loi prédéterminée. Le guide 46 se prolonge en un guide 9 dans lequel peut être récupérée l'intensité lumineuse de sortie $I_S$. Le guide 106 se prolonge en un guide 10 auquel est accolé une photodiode 7 fournissant la tension de rétro-réaction $V_R$.

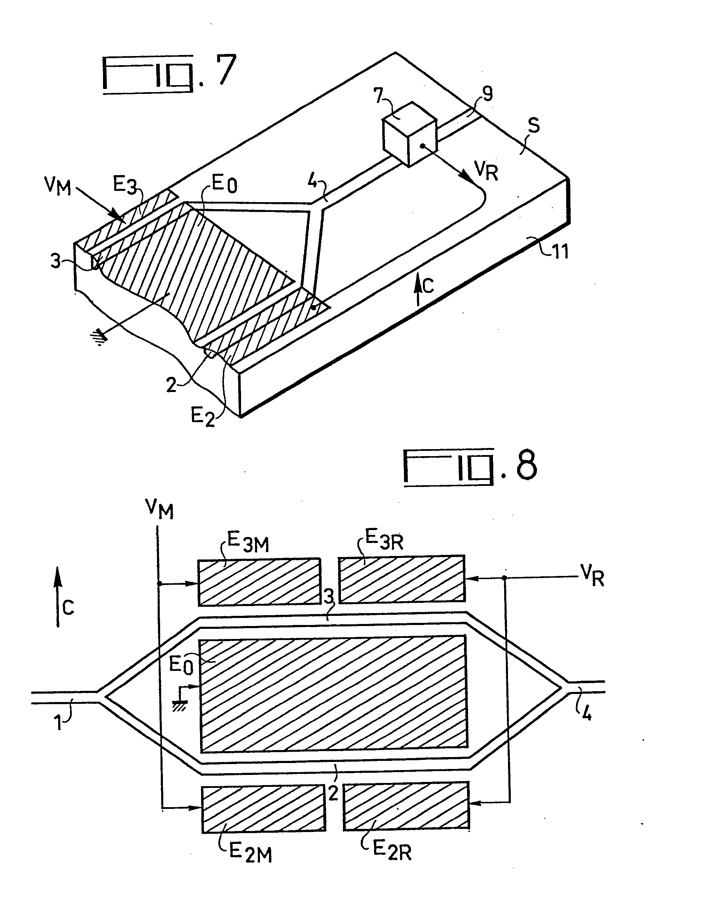

La Figure 7 représente une autre variante de réalisation de l'invention. Selon cette variante la photodiode 7 est collée sur la surface S au dessus du guide 4, de façon à récupérer une partie de l'énergie lumineuse circulant dans ce guide 4. En effet, la photodiode 7 étant par exemple réalisée en silicium dont l'indice de réfraction est très supérieur à celui du niobate de lithium, une fraction de l'énergie lumineuse va fuir vers la photodiode. L'autre fraction est récupérée dans le prolongement 9 du guide 4. Ce mode de réalisation particulièrement simple permet de supprimer le séparateur 6 réalisé de façon séparée. En effet la séparation s'effectue automatiquement par la jonction guide-diode.

La Figure 8 représente une variante de réalisation des électrodes de commande de l'interféromètre. Dans la description ci-dessus, le champ électrique modulant et le champ électrique de rétro-réaction sont appliqués séparément, l'un à l'un des bras de l'interféromètre, l'autre à l'autre bras. Il est possible d'appliquer ces champs électriques simultanément aux deux bras. Dans la réalisation représentée sur la Figure 8, une partie de la longueur de chaque bras de l'interféromètre est soumise au champ modulant provenant de la tension $V_M$ tandis qu'une autre partie est soumise au champ de rétro-réaction provenant de la tension $V_R$. Pour cela, une électrode centrale $E_0$ reliée à la masse est disposée entre les deux bras 2 et 3 comme précédemment. De part et d'autre des bras 2 et 3 sont disposées des électrodes $E_{3M}$, $E_{3R}$ pour la branche 3 et $E_{2M}$, $E_{2R}$ pour la branche 2. Les électrodes $E_{3R}$ et $E_{2R}$ sont reliées à la sortie de la photodiode 7 ou de l'amplificateur 8. Le fait d'appliquer des champs électriques de même intensité et de sens opposés aux deux bras 2 et 3 de l'interféromètre permet d'augmenter la sensiblité du modulateur, c'est-à-dire de diminuer les tensions modulantes nécessaires pour obtenir un déphasage donné. Si par exemple on donne aux électrodes $E_{3M}$ et $E_{2M}$ la même longueur qu'aux électrodes $E_2$ et $E_3$ précédentes, les longueurs des électrodes $E_{2R}$ et $E_{3R}$ étant choisies en fonction de la valeur de la tension $V_R$ obtenue à la sortie de la photodiode pour obtenir le taux de rétro-réaction souhaitée, la sensibilité du modulateur est multipliée par 2. D'autre part le dispositif étant plus symétrique, le taux de modulation peut être augmenté. Il est possible également d'avoir d'autres dispositions d'électrodes, par exemple de supprimer l'une des deux paires d'électrodes pour l'un des deux guides, ou bien de conserver deux électrodes d'un côté et une seule électrode de l'autre, ou bien toutes autres dispositions conduisant à l'obtention de deux champs électriques indépendants l'un proportionnel à la tension modulante, l'autre proportionnel à l'intensité lumineuse de sortie fournissant la rétro-réaction.

Le modulateur sus-décrit peut être intégré, avec d'autres fonctions optiques, dans un circuit optique intégré utilisable, par exemple, dans un système de transmission pour télécommunications optiques.

## Revendications

1. Modulateur d'intensité lumineuse comprenant, à la surface (S) d'un substrat (11) possédant des propriétés électrooptiques, un interféromètre à deux bras (2, 3) reliés à un guide d'entrée (1) destiné à recevoir un rayonnement optique incident ($I_E$), les fractions de rayonnement propagées dans les deux bras (2, 3) se combinant à la sortie de l'interféromètre dans un guide de sortie (4), l'intensité du rayonnement émergeant ($I_S$) étant fonction du déphasage introduit dans l'interféromètre par un champ électrique modulant entre des électrodes ($E_0$–$E_3$; $E_0$–$E_{2M}$, $E_{3M}$) appliqué à au moins l'un des bras (2, 3), caractérisé en ce qu'il comprend un séparateur d'énergie lumineuse (6) interposé sur le guide de sortie (4), permettant d'extraire une partie ($I_R$) de l'intensité émergente ($I_S$) pour la coupler à un photodétecteur (7) fournissant un champ électrique modulant de rétro-réaction entre des électrodes ($E_0$–$E_2$; $E_0$–$E_{3R}$, $E_{2R}$) dans au moins l'un des bras (2, 3), afin d'augmenter l'étendue de la plage de modulation linéaire.

2. Modulateur selon la revendication 1, caractérisé en ce que l'interféromètre et les guides sont réalisés sur l'une des faces du substrat par création de zones dans lesquelles l'indice de réfraction est supérieur à celui du substrat.

3. Modulateur selon la revendication 2, caractérisé en ce que le substrat est en niobate de lithium, l'interféromètre et les guides étant obtenu par diffusion localisée de titane.

4. Modulateur selon l'une quelconque des revendications 2 et 3, caractérisé en ce que le séparateur est constitué par une bifurcation (6) dans le guide de sortie (4, 9).

5. Modulateur selon l'une quelconque des revendications 2 et 3, caractérisé en ce que le séparateur est constitué par un coupleur directionnel (46, 106) à deux branches, l'une (46) des branches étant constituée par le guide de sortie (4, 9).

6. Modulateur selon l'une quelconque des revendications 2 et 3, caractérisé en ce que le photodétecteur (7) est collé sur la face (S) du substrat (11), au-dessus du guide de sortie (9), le séparateur étant constitué par le couplage lumineux entre le guide et le photodétecteur.

7. Modulateur selon l'une quelconque des revendications 2 à 6, caractérisé en ce que les champs électriques modulant et de rétroréaction sont appliqués respectivement aux deux bras (2, 3) de l'interféromètre et sont obtenus entre une première électrode ($E_0$) et respectivement une deuxième et une troisième électrodes ($E_3$, $E_2$), ces trois électrodes étant disposées de façon que des tensions électriques appliquées respectivement aux deuxième et troisième électrodes et ayant la même polarité par rapport à la première électrode produisent dans les deux bras (2, 3) des champs électriques de sens opposés.

8. Modulateur selon la revendication 7, caractérisé en ce que les trois électrodes ($E_o$, $E_2$, $E_3$) sont disposées de façon à être adjacentes aux bras (2, 3) de l'interféromètre, la première étant placée de part et d'autre de l'interféromètre, de façon à créer dans les bras des champs électriques parallèles à la surface S.

9. Modulateur selon les revendications 3 et 7, caractérisé en ce que la première électrode ($E_0$) est placée entre les deux bras (2, 3) de façon à recouvrir sélectivement l'un (3) des bras, la deuxième électrode ($E_3$) étant placée de façon à être adjacente à ce bras (3), la troisième électrode ($E_2$) étant placée de façon à recouvrir l'autre bras (2), de façon à créer dans les guides des champs électriques perpendiculaires à la surface (S).

10. Modulateur selon l'une quelconque des revendications 2 à 6, caractérisé en ce que les champs électriques modulant et de rétro-réaction sont de même direction et sont appliqués à au moins l'un des bras au moyen de deux jeux d'électrodes ($E_{3M}$ et $E_{3R}$) se succédant selon la longueur de ce bras.

11. Modulateur selon la revendication 3, et l'une quelconque des revendications 8 à 10, caractérisé en ce que le substrat (11) est orienté de façon que son axe cristallographique c soit parallèle aux champs électriques créés dans les guides.

12. Circuit optique intégré, caractérisé en ce qu'il comporte un modulateur selon l'une quelconque des revendications précédentes.

**Patentansprüche**

1. Lichtintensitätsmodulator mit einem zweiarmigen Interferometer (2, 3) an der Oberfläche (S) eines Substrats (11), des elektrooptische Eigenschaften besitzt, wobei die beiden Interferometerarme (2, 3) an eine Eingangslichtleitung (1) angeschlossen sind, die eine einfallende Lichtstrahlung ($I_E$) empfängt, und die Teilstrahlen, die die beiden Arme (2, 3) durchlaufen, am Ausgang des Interferometers sich in einer Ausgangslichtleitung (4) kombinieren, wobei die Lichtstärke ($I_S$) der austretenden Strahlung von der Phasenverschiebung abhängt, die von einem zwischen Elektroden ($E_0$—$E_3$; $E_0$—$E_{2M}$, $E_{3M}$) und an mindestens einem der Arme (2, 3) liegenden modulierenden elektrischen Feld in das Interferometer eingeführt wird, dadurch gekennzeichnet, daß er einen Lichtenergieseparator (6) enthält, der in der Ausgangslichtleitung (4) liegt und einen Teil ($I_R$) der Energie ($I_S$) des austretenden Lichts abzuzweigen erlaubt und ihn an einen Lichtdetektor (7) ankoppelt, der ein modulierendes elektrisches Rückkopplungsfeld zwischen den Elektroden ($E_0$—$E_2$; $E_0$—$E_{3R}$; $E_{2R}$) in mindestens einem der Arme (2, 3) erzeugt, um den Bereich der linearen Modulation auszuweiten.

2. Modulator nach Anspruch 1, dadurch gekennzeichnet, daß das Interferometer und die Lichtleiter auf einer der Substratoberflächen durch Ausbildung von Zonen gebildet sind, in denen der Brechungsindex größer als der des Substrats ist.

3. Modulator nach Anspruch 2, dadurch gekennzeichnet, daß das Substrat aus Lithiumniobat besteht und das Interferometer sowie die Lichtleitungen durch örtliche Diffusion von Titan erhalten werden.

4. Modulator nach einem beliebigen der Ansprüche 2 und 3, dadurch gekennzeichnet, daß der Separator durch eine Gabelung (6) in der Ausgangslichtleitung (4, 9) gebildet wird.

5. Modulator nach einem beliebigen der Ansprüche 2 und 3, dadurch gekennzeichnet, daß der Separator von einem zwei Zweige aufweisenden Richtkoppler (46, 106) gebildet ist, von dem ein Zweig (46) die Ausgangslichtleitung (4, 9) bildet.

6. Modulator nach einem beliebigen der Ansprüche 2 und 3, dadurch gekennzeichnet, daß der Lichtdetektor (7) auf die Oberfläche (S) des Substrats (11) aufgeklebt ist, und zwar oberhalb der Ausgangslichtleitung (9), und daß der Separator durch die Lichtkopplung zwischen der Lichtleitung und dem Photodetektor gebildet wird.

7. Modulator nach einen beliebigen der Ansprüche 2 bis 6, dadurch gekennzeichnet, daß das elektrische Modulationsfeld und das elektrische Rückkopplungsfeld je an einen der beiden Arme (2, 3) des Interferometers angelegt sind und zwischen einer ersten Elektrode ($E_0$) sowie einer zweiten bzw. dritten Elektrode ($E_3$, $E_2$) erhalten werden, wobei diese drei Elektroden so angeordnet sind, daß die an die zweite bzw. die dritte Elektrode angelegten elektrischen Spannungen, die beide die gleiche Polarität bezüglich der ersten Elektrode besitzen, in den beiden Armen (2, 3) elektrische Felder in entgegengesetzten Richtungen erzeugen.

8. Modulator nach Anspruch 7, dadurch gekennzeichnet, daß die drei Elektroden ($E_0$, $E_2$, $E_3$) so angeordnet sind, daß sie an den Interferometerarmen (2, 3) anliegen, wobei die erste Elektrode zu beiden Seiten des Interferometers liegt, und somit in den Armen elektrische Felder erzeugt werden, die parallel zur Oberfläche S verlaufen.

9. Modulator nach den Ansprüchen 3 und 7, dadurch gekennzeichnet, daß die erste Elektrode ($E_0$) zwischen den beiden Armen (2, 3) liegt und so selektiv einen der Arme (3) abdeckt, während die zweite Elektrode ($E_3$) so angeordnet ist, daß sie an diesem Arm (3) anliegt, und die dritte Elektrode ($E_2$) so angeordnet ist, daß sie den anderen Arm (2) überdeckt, so daß sich in den Lichtleitungen elektrische Felder senkrecht zur Oberfläche (S) ausbilden.

10. Modulator nach einem beliebigen der Ansprüche 2 bis 6, dadurch gekennzeichnet, daß das elektrische Modulations- und das Rückkopplungsfeld einander gleichgerichtet sind und an mindestens einen der Arme über zwei Elektrodensätze (E$_{3M}$ und E$_{3R}$) angelegt sind, die in Längsrichtung der Arme aufeinander folgen.

11. Modulator nach Anspruch 3 und einem beliebigen der Ansprüche 8 bis 10, dadurch gekennzeichnet, daß das Substrat (11) so ausgerichtet ist, daß seine kristallographische Achse c parallel zu den in den Lichtleitungen erzeugten elektrischen Feldern liegt.

12. Integrierte optische Schaltung, dadurch gekennzeichnet, daß sie einen Modulator nach einem beliebigen der vorhergehenden Ansprüche enthält.

## Claims

1. Light intensity modulator, comprising an interferometer device with two arms (2, 3) on the surface (S) of a substrate (11) having electrooptical properties, the arms of this interferometer device being connected to an input guide (1) which receives an incident optical radiation (I$_E$), the fractions of the radiation which are propagated in said arms (2, 3) being combined at the interferometer output in an output guide (4), the outgoing radiation energy (I$_S$) depending on the phase shift which is introduced in the interferometer device by an electric modulating field applied between electrodes (E$_0$–E$_3$; E$_0$–E$_{2M}$; E$_{3M}$) to at least one of the arms (2, 3), characterized in that it comprises a light energy separator (6) which is interposed on the output guide (4) and which extracts a fraction (I$_R$) of the outgoing energy (I$_S$), this fraction being coupled to a photodetector (7) which furnishes an electric feedback modulating field between electrodes (E$_0$–E$_2$; E$_0$–E$_{3R}$; E$_{2R}$) in at least one of the arms (2, 3) in order to increase the range of linear modulation.

2. A modulator according to claim 1, characterized in that the interferometer device and the guides are realized on one of the substrate surfaces by creating zones in which the refraction index is higher than that of the substrate.

3. A modulator according to claim 2, characterized in that the substrate is made of lithium niobate, the interferometer device and guides being obtained by a local diffusion of titane.

4. A modulator according to any one of claims 2 and 3, characterized in that the separator is constituted by a bifurcation (6) in the output guide (4, 9).

5. A modulator according to any one of claims 2 and 3, characterized in that the separator is constituted by a directional coupler (46, 106) having two branches, one of which (46) constitutes the output guide (4, 9).

6. A modulator according to any one of claims 2 and 3, characterized in that the photodetector (7) is glued to the substrate (11) surface (S) above the output guide (9), the separator being constituted by the light coupling between the guide and the photodetector.

7. A modulator according to any one of the claims 2 to 6, characterized in that the electric modulating field and the electric feedback field are applied to the two arms (2, 3) respectively of the interferometer device and are obtained between a first electrode (E$_0$) and a second or a third electrode respectively (E$_3$, E$_2$), these three electrodes being disposed in such a way, that the electric voltages applied respectively to the second and the third electrode having the same polarity with respect to the first electrode produce in the two arms (2, 3) electrical fields of opposite direction.

8. A modulator according to claim 7, characterized in that the three electrodes (E$_0$, E$_2$, E$_3$) are disposed adjacent to the arms (2, 3) of the interferometer device, the first electrode being placed on both sides of the interferometer device in such a way that electrical fields which are parallel to the surface S are created in the arms.

9. A modulator according to claims 3 and 7, characterized in that the first electrode (E$_0$) is placed between the two arms (2, 3) in such a way, that it covers selectively one of the arms (3), the second electrode (E$_3$) being placed adjacent to this arm (3) and the third electrode (E$_2$) being placed in such a way that it covers the other arm (2) in order to create in the guides electrical fields which are perpendicular to the surface (S).

10. A modulator according to any one of the claims 2 to 6, characterized in that the electrical modulating field and the electrical feedback field have the same direction and are applied to at least one of the arms through two sets of electrodes (E$_{3M}$ and E$_{3R}$), these sets following one another along the length of this arm.

11. A modulator according to claim 3 and according to any one of the claims 8 to 10, characterized in that the substrate (11) is arranged in such a way that its cristallographic axis c is parallel to the electrical fields which are created in these guides.

12. An integrated optical circuit, characterized in that it comprises a modulator according to any one of the preceding claims.

FIG. 1

FIG. 2

FIG.3

FIG.4

FIG. 5

FIG. 6

# Fig. 7

# Fig. 8